# DEMANDE DE BREVET EUROPEEN

(11) **EP 1 114 767 A2**
(43) Date de publication de la demande: **11.07.2001**
(21) Numéro de dépôt: 01400021.0
(22) Date de dépôt: 05.01.2001
(51) Int. Cl.: B62M 7/04

(54) **Dispositif pour véhicule à roue avant directrice et véhicule correspondant**

(30) Priorité: 07.01.2000 FR 0000147
(71) Demandeur: Offenstadt, Eric, 95520 Osny (FR); Sarl Tecmas, 18000 Bourges (FR)
(72) Inventeur: Offenstadt, Eric, 95520 Osny (FR)
(74) Mandataire: Kaspar, Jean-Georges

(57) **Abrégé**

Un dispositif, notamment pour véhicule à une roue avant directrice et à transmission par chaîne (15) entraînant une roue arrière motrice, comporte une suspension arrière à bras oscillant (11) et au moins deux pignons coopérant avec cette chaîne (15) d'entraînement est caractérisé par la présence d'un pignon, disque ou poulie intermédiaire porté (16) par le cadre (1) du véhicule de diamètre et de position déterminés pour qu'en phase d'accélération, la suspension soit comprimée de manière que le brin supérieur de la chaîne (15) soit sensiblement parallèle au bras oscillant, en réduisant ainsi les accélérations angulaires et parasites de la roue arrière ; et par une position de l'axe (12) de bras oscillant (11)à une hauteur égale ou supérieure à l'axe (13) de roue arrière lors de l'enfoncement maximal de la roue arrière.

## Description

L'invention est relative à un véhicule automoteur à une roue avant directrice, notamment à une motocyclette dite "sportive", équipé de pneumatiques performants.

On connaît de nombreux véhicules à deux roues motorisés sportifs, équipés de pneumatiques performants, du genre cyclomoteurs, vélomoteurs de 125 centimètres cubes et plus, notamment des motocyclettes sportives de technologies similaires aux "superbikes" et les motos 600 sport.

Ces véhicules à deux roues dits "sportifs" sont généralement équipés d'une fourche télescopique dont l'axe directionnel passe par l'élément solidaire de l'avant du cadre. Une telle fourche télescopique est le plus souvent montée sur un tube de direction par l'intermédiaire de roulements à billes. L'angle formé par l'axe du tube de direction avec la verticale varie avec l'assiette du véhicule, comme décrit dans le document EP 0 941 916 A1. Les variations d'assiette du véhicule correspondent aux variations d'angle par rapport à la position horizontale du véhicule au repos.

Les variations d'assiette du véhicule engendrent ainsi des variations angulaires de l'élément portant les roulements de direction qui déterminent l'angle de chasse. La variation de chasse constitue un avantage essentiel pour les motocyclettes, puisque cette variation permet pendant les phases de freinage d'entrer en virage avec un angle de chasse plus proche de la verticale, et subséquemment avec une traînée réduite indispensable à la maniabilité. Cette variation d'assiette permet également lors des phases d'accélération de disposer alors d'un tube de direction moins vertical, c'est-à-dire d'une chasse augmentée, et subséquemment d'une valeur supérieure de la traînée, indispensable à la stabilité.

Les véhicules à deux roues sportifs actuels ont ainsi besoin d'une variation d'assiette importante pour obtenir une bonne maniabilité en virage et une bonne stabilité à l'accélération, en bénéficiant d'une variation induite importante de la traînée. Une variation de chasse importante est obtenue avec un empattement court : en effet, plus l'empattement est court, plus la variation d'assiette est grande, et plus le véhicule est maniable en virage.

La présente invention est particulièrement destinée aux véhicules à deux roues motorisés, notamment les motos sportives ou de compétition, équipés d'une suspension arrière du type bras oscillant et d'une transmission finale par chaîne. La combinaison d'une suspension arrière du type bras oscillant et d'une transmission par chaîne engendre sur les bosses des accélérations angulaires et parasites de la roue arrière préjudiciables à la longévité et à l'adhérence du pneumatique arrière, en particulier lors des phases d'accélération. Les accélérations angulaires et parasites induites sur la roue arrière sont d'autant plus importantes que le bras oscillant est plus court.

Il en résulte par conséquent une contradiction entre la recherche d'un empattement court favorable à la maniabilité du véhicule, et l'obtention d'une bonne adhérence, que l'homme de l'art appelle "motricité", du pneumatique arrière lors des phases d'accélération.

En effet, lors de la phase d'accélération, la stabilité de ces motocyclettes particulières dépend des forces engendrées par la suspension arrière, d'une part, par l'angle de poussée du bras oscillant sur le cadre et, d'autre part, par l'effort de réaction de la chaîne sur ledit bras oscillant. Plus le bras oscillant est court, plus la variation de l'angle que fait ledit bras oscillant avec l'horizontal est importante, et plus le bras oscillant génère l'instabilité.

Pour remédier à ces pertes de motricité et de stabilité, on prévoit actuellement de compenser ces inconvénients par un bras oscillant le plus long possible, générant une variation angulaire la plus réduite possible pour un empattement donné.

La solution actuellement proposée résulte du fait qu'une variation d'assiette importante est procurée par :
1. des pneumatiques ayant un coefficient d'adhérence important, et assurant un roulement sans glissement sur la surface du sol,
2. des courses de suspension généreuses,
3. des empattements courts,
4. des puissances importantes du moteur et des freins.

En tenant compte de ces critères, les suspensions de l'art actuel déterminent l'agencement des véhicules à deux roues sportifs actuels, en tenant compte du fait que l'empattement doit être court pour que les véhicules soient performants, tout en prévoyant un bras oscillant le plus long possible, ce qui déplace obligatoirement le moteur le plus près possible de la roue avant.

Cependant, cette solution retenue n'est pas satisfaisante, car cette répartition courante des masses et ce déplacement du moteur vers l'avant induisent un déficit de poids sur la roue arrière, d'où il résulte un manque de motricité. Pour compenser ce manque de motricité, on prévoit de placer les masses en hauteur, afin d'effectuer un transfert de charge substantiel sur la roue arrière lors des accélérations, ce transfert de charge étant indispensable pour retrouver un minimum de motricité.

Mais, dans ce cas, le moteur placé en avant et en hauteur provoque un délestage de la roue arrière au freinage, ce qui oblige le pilote à diminuer la pression sur la poignée de frein en augmentant ainsi la distance de freinage. En effet, le maintien d'une pression de freinage importante provoque une levée de la roue arrière, susceptible d'éjecter le pilote par-dessus la roue avant du véhicule.

En résumé, l'état de la technique actuel résulte de compensations successives des inconvénients rencontrés successivement dans l'évolution technologique des motocyclettes. Un préjugé actuel de l'homme du métier est ainsi que toutes les motos de grand prix ou à tendances sportives actuelles doivent obligatoirement être courtes et hautes, en présentant une répartition des masses sur l'avant.

Un premier inconvénient de ces motocyclettes actuelles est que leur empattement court et leur hauteur provoquent un délestage de la roue arrière et induit un coefficient de pénétration dans l'air médiocre. Un deuxième inconvénient des motocyclettes actuelles est que la répartition des masses sur l'avant provoque une tendance du véhicule à se dérober de l'avant (sous-virage), ainsi qu'une propension à délester la roue arrière au freinage, obligeant ainsi le pilote à augmenter sa distance de freinage.

Un premier but de l'invention est de remédier aux inconvénients précités de la technique connue.

Un deuxième but de l'invention est de dissocier les différentes fonctions des suspensions et des répartitions de masses, pour rendre indépendantes la variation de chasse et la variation d'assiette, et pour rendre la recherche d'une réduction des accélérations parasites de roue arrière sur des bosses indépendante d'une longueur importante de bras oscillant qui pénalise la motricité et le freinage.

Un troisième but de l'invention est de permettre à un véhicule à deux roues sportif, équipé de pneumatiques performants ayant par exemple des coefficients d'adhérence supérieurs à Mu = 1,2, de bénéficier d'un empattement long et d'une variation d'assiette réduite, sans pénaliser la maniabilité.

Un quatrième but de l'invention est de permettre l'utilisation d'une suspension à déport géométrique variable avec un empattement long. L'homme de l'art considère qu'un empattement long correspond à une valeur supérieur à : 1300 mm pour une cylindrée de 50 centimètres cubes, 1350 mm pour une 125 centimètres cubes, 1400 mm pour une 250 centimètres cubes, 1450 mm pour une 500 Cc de grand prix ou une 600 centimètres cubes, 1500 mm pour une 750 centimètres cubes, plus de 1500 mm pour une 1000 centimètres cubes, 1550 mm pour une 1300 centimètres cubes, les cylindrées intermédiaires entre ces valeurs présentant des valeurs minimales d'empattement intermédiaires entre les valeurs précitées. Toutes ces valeurs d'empattement sont mesurées au repos, suspensions détendues.

Un autre but de l'invention est de permettre la conjonction d'une suspension arrière de l'art antérieur propre à annuler les accélérations de roues parasites, en particulier une suspension dite "anti-squat" par l'homme de l'art, avec un empattement long. Une suspension dite "anti-squat" comprend généralement deux pignons de chaîne de tailles sensiblement égales, afin de maintenir le brin de chaîne supérieur sensiblement parallèle au bras de suspension arrière, comme décrit dans le document US 4.433.747 du même inventeur.

Une suspension anti-squat décrite dans la présente invention se caractérise par l'utilisation d'une chaîne unique. Son bras de suspension oscille autour d'un axe situé en arrière du pignon de sortie de boîte. Ledit axe est positionné en hauteur de façon que le bras oscillant s'approche de la position horizontale lors de la compression maximum des éléments amortisseurs. Cette suspension comporte un pignon disposé en arrière de l'axe de bras oscillant. Dans une autre variante de l'invention, ce pignon peut être remplacé par une poulie ou une glissière de diamètre identique au diamètre dudit pignon. Le pignon de roue arrière tourne autour d'un axe libre situé également en arrière de l'axe géométrique de bras oscillant. La hauteur de cet axe libre est prédéterminée pour être alignée avec les axes des pignons de roue arrière et avec l'axe du bras oscillant, lorsque la suspension se situe entre une position de détente totale et une position correspondant à la moitié de sa course.

Dans ce cas, les forces de réaction entre la chaîne et le bras oscillant s'annulent lorsque les tangentes au cercle décrit par le brin de chaîne supérieur et au cercle décrit par le bras oscillant sont parallèles. La force d'accélération exercée sur le brin de chaîne supérieur tend alors à stabiliser naturellement la suspension sur la position du brin de chaîne supérieur, le plus long. Cette position correspond à l'alignement des axes du bras oscillant avec l'axe du pignon intermédiaire, ceci procurant un effet anti-écrasement lorsque la suspension est comprimée et anti-montée lorsque la suspension est détendue, du fait de la stabilité de l'équilibre réalisé par l'alignement desdits axes.

L'homme de l'art constate que cette stabilité ne peut pas être obtenue avec le bras oscillant conventionnel, correspondant à un alignement instable résultant du fait que la chaîne est au contraire plus tendue sur l'alignement des axes du bras oscillant avec celui du pignon de sortie de boîte, d'où il résulte que la suspension a tendance à vouloir quitter cet alignement instable.

L'invention est particulièrement applicable aux véhicules à deux roues à empattement long, et permet d'utiliser un moteur plus long et mieux centré, comme à titre d'exemple, en superbikes, un moteur de trois à six cylindres disposés à plat longitudinalement, ou bien des moteurs mono ou bi-cylindres à plat, en prévoyant une position des équipements volumineux, en particulier électroniques ou de carburation sous ledit moteur, à l'exception des tubes d'échappement et d'autres éléments peu volumineux disposés en hauteur.

Cette disposition particulière libère un espace central entre le niveau de la selle et le niveau supérieur du moteur et procure une place supplémentaire, par exemple pour un réservoir d'essence mieux centré. Ce réservoir d'essence peut alors, grâce à la place gagnée à ce niveau supérieur, être beaucoup plus important que dans l'art antérieur, ce qui est favorable à un usage routier ou sportif, soit être beaucoup plus bas et étroit pour réduire le maître-couple du véhicule dans le cas d'une moto sportive de compétition.

Dans une variante selon laquelle le moteur ne peut pas être suffisamment reculé pour assurer une bonne motricité, le pilote sera placé plus loin du tube de direction, c'est-à-dire vers l'arrière, que dans une motocyclette de l'art antérieur. Pour permettre ce déplacement du pilote, l'invention prévoit alors un relais permettant de reculer l'axe de rotation des poignées de commande par rapport à l'axe de rotation du tube de direction.

L'invention a pour objet un dispositif, notamment pour véhicule à une roue avant directrice et à transmission par chaîne entraînant une roue arrière motrice, comportant une suspension arrière à bras oscillant et au moins deux pignons coopérant avec cette chaîne d'entraînement, caractérisé par la présence d'un pignon, disque, glissière courbe ou poulie intermédiaire porté par le cadre du véhicule, de diamètre et de position déterminés pour qu'en phase d'accélération, la suspension soit comprimée de manière que le brin supérieur de la chaîne soit sensiblement parallèle au bras oscillant, en réduisant ainsi les accélérations angulaires et parasites de la roue arrière ; et par une position de l'axe de bras oscillant à une hauteur égale ou supérieure à l'axe de roue arrière lors de l'enfoncement maximal de la roue arrière.

Selon d'autres caractéristiques de l'invention :
- ledit pignon, disque, ou poulie intermédiaire est monté libre en rotation sur une partie du cadre du véhicule
- ledit pignon, disque, ou poulie intermédiaire est entraîné en rotation par le moteur du véhicule et entraîne la chaîne de transmission arrière,
- le diamètre du pignon, disque, glissière courbe ou poulie intermédiaire ou glissière courbe est voisin du diamètre du pignon de roue arrière ou supérieur au diamètre du pignon de roue arrière,
- le dispositif comporte un cadre destiné à recevoir un bâti de fourche télescopique de roue avant directrice, et comporte un ensemble de suspension-transmission arrière anti-squat et annulant les accélérations angulaires et parasites de roue arrière,
- l'ensemble de suspension-transmission arrière comporte un bras oscillant pivotant sur le cadre et un organe d'amortissement monté entre le cadre et le bras oscillant,
- le cadre est agencé pour déterminer un empattement long de véhicule, après montage complet du véhicule
- le cadre est conformé pour recevoir un moteur à cylindres sensiblement horizontaux, d'inclinaison comprise dans une plage angulaire de moins dix à plus quarante degrés par rapport à l'horizontale,
- le cadre porte un relais mécanique permettant de commander la direction de la roue avant au moyen de poignées de commande décalées par rapport à l'axe du tube de direction de la roue avant directrice,

L'invention a également pour objet un véhicule à une roue avant directrice, notamment une motocyclette, incorporant un dispositif selon l'invention.

L'invention sera mieux comprise grâce à la description qui va suivre donnée à titre d'exemple non limitatif en référence aux dessins annexés dans lesquels :
- La figure 1 représente schématiquement une vue en élévation latérale d'une motocyclette selon l'invention dans une position moyenne.
- La figure 2 représente schématiquement une vue en élévation latérale d'une motocyclette selon l'invention en position d'accélération correspondant à une bonne stabilité.
- La figure 3 représente schématiquement une vue en élévation latérale d'une motocyclette selon l'invention en position de freinage correspondant à une bonne maniabilité lors d'une entrée en virage.

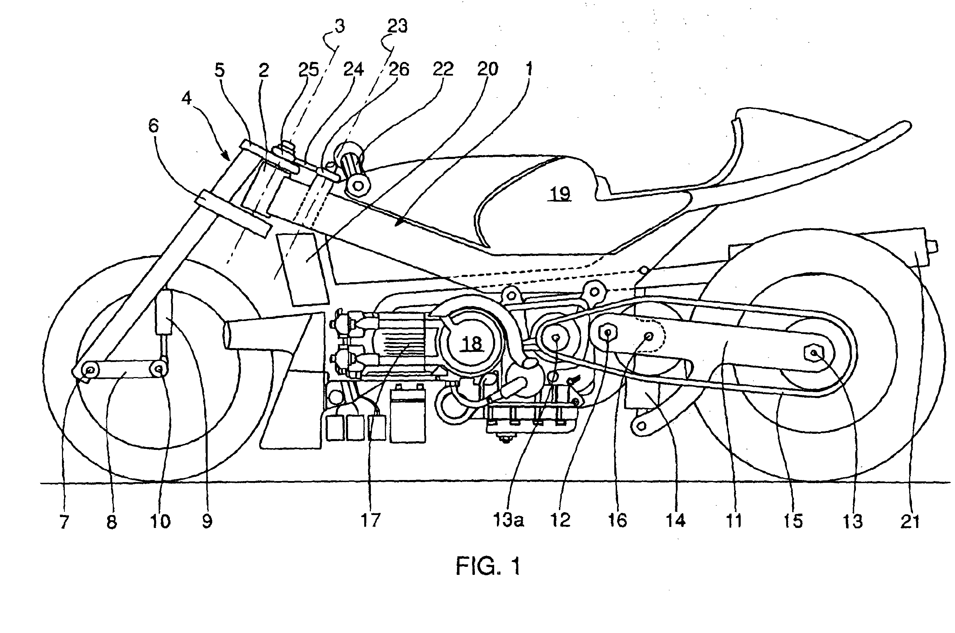

En référence aux figures 1 à 3, les éléments identiques ou fonctionnellement équivalents sont repérés par des chiffres de référence identique.

La vue latérale en élévation d'une motocyclette ou d'un vélomoteur selon l'invention, montre un cadre 1 porteur d'un tube de direction 2 dont l'inclinaison détermine l'axe directionnel 3 aussi appelé axe de chasse. Au moins un bâti 4 de fourche est solidaire d'au moins un T de fourche 5 ou 6 pivotant autour de l'axe directionnel 3.

Ledit bâti 4 de fourche porte en sa partie inférieure un axe 7 autour duquel oscille au moins un bras tiré de suspension 8. Le bras 8 et le bâti 4 de fourche de suspension avant sont reliés par au moins un élément amortisseur 9.

L'extrémité arrière du bras tiré porte l'axe 10 de roue qui est apte à décrire une portion de cercle de centre 7.

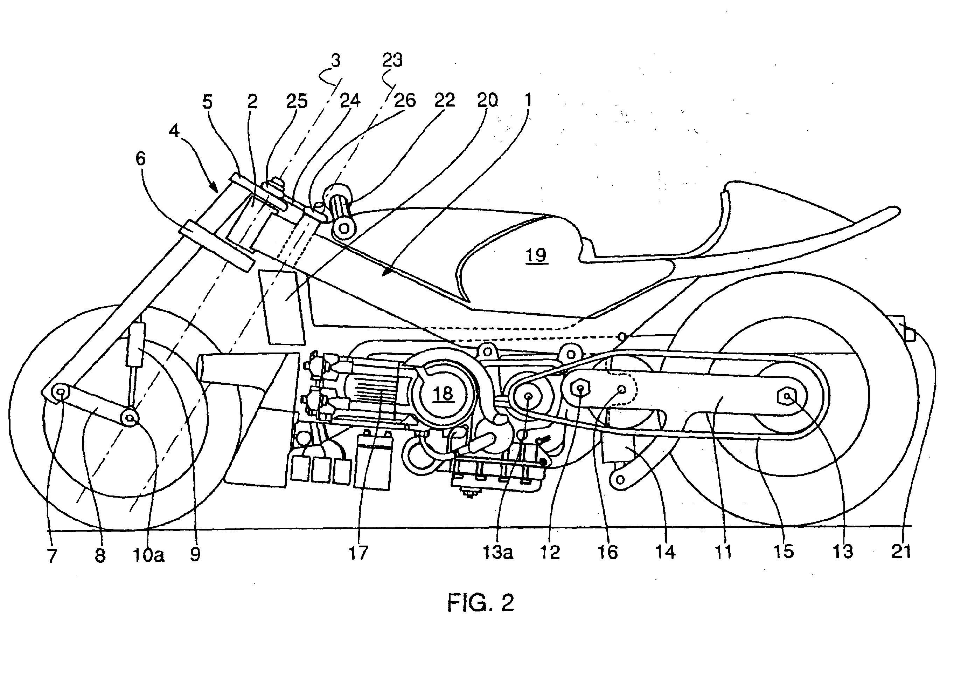

Lorsque la moto accélère (figure 2), l'axe 10 de roue descend en 10a et le déport géométrique s'en trouve sensiblement réduit, comme décrit dans le document EP 0 941 916 A.

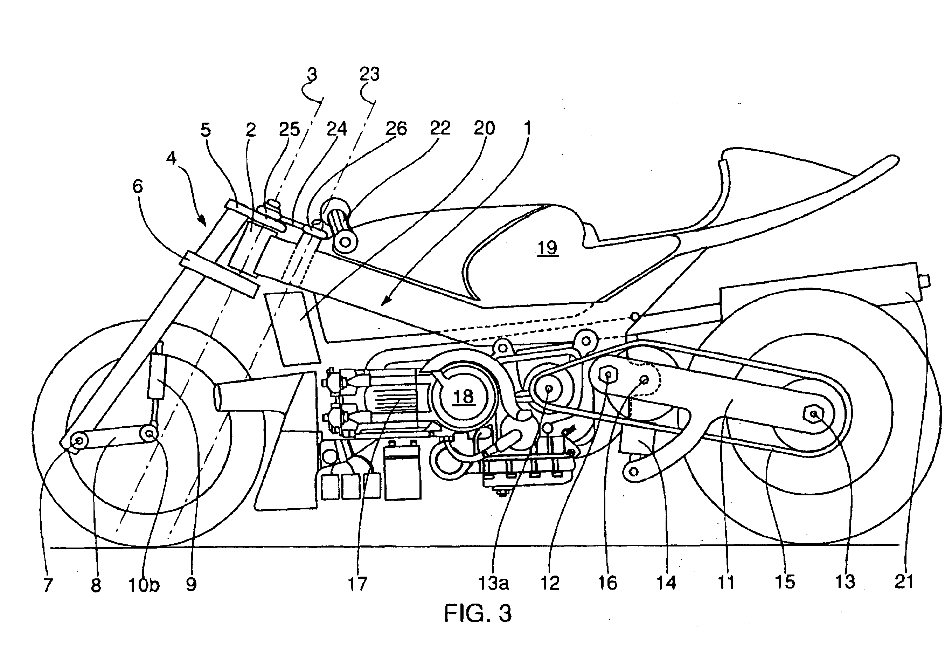

Lorsque la moto freine (figure 3), l'axe de roue monte en 10b pour une valeur de déport géométrique supérieure à la valeur de déport moyenne (figure 1), et subséquemment pour une traînée réduite et une maniabilité accrue.

Cette variation de déport géométrique provoque une variation de traînée induite qui peut se substituer à la variation de traînée procurée dans l'art actuel par la seule variation de l'assiette du véhicule. Ladite variation de traînée induite permet ainsi de réduire la variation d'assiette et subséquemment d'augmenter l'empattement du véhicule sans perdre de maniabilité.

Le tube de direction 2, porteur d'une suspension avant à déport géométrique variable, est relié à une transmission arrière anti-squat qui annule les accélérations de roues parasites par l'intermédiaire d'une cadre 1.

Dans le mode de réalisation représenté, l'ensemble suspension-transmission est constitué par un bras oscillant 11 pivotant autour d'un axe 12 de bras oscillant par rapport au le cadre 1.

Ledit bras est porteur de l'axe 13 de roue arrière et pourvu d'un organe d'amortissement 14 et d'une transmission par une chaîne 15 ou par une courroie.

Cette transmission présente un pignon de sortie de boîte d'axe 13a, un pignon de roue arrière tournant autour de l'axe 13 de roue et un pignon, disque ou poulie intermédiaire porté par le cadre 1 en 16. Le pignon 16 est de diamètre sensiblement égal ou supérieur au pignon de roue arrière.

Le pignon libre 16 est fixé en arrière de l'axe géométrique du bras oscillant 12, de façon que les points 12, 16 et 13 se trouvent alignés dans une position prédéterminée de la suspension correspondant à son point d'équilibre(figure 1). ledit point d'équilibre peut être choisi de préférence entre la détente maximum et la moitié de la compression maximum des éléments amortisseurs et correspond à la pleine accélération du véhicule, le brin de chaîne supérieur étant alors parallèle au bras oscillant.

L'invention se caractérise par un diamètre de pignon libre d'axe 16 calculé pour que dans une position correspondant à la compression subie en virage et dans les sorties de virage, l'axe 16 du pignon fou se trouve au dessous de l'alignement des points 12 et 13, de manière à produire un effet anti-écrasement. D'autre part l'axe géométrique du bras 11 se trouve alors dans la position sensiblement horizontale correspondant à l'écrasement maximum de la suspension au virage et en début d'accélération.

Dans une autre variante de l'invention non représentée, l'axe 13a de pignon de sortie de boîte peut être confondu favorablement avec l'axe 16 : cette disposition nécessite une fabrication spéciale du moteur et de la boîte de vitesses.

Dans une autre configuration, le bras oscillant peut être remplacé par un parallélogramme constitué d'au moins deux bras superposés, l'essentiel est que l'axe géométrique induit par ces deux bras produise une cinématique d'axe 16 identique à celle induite par le bras 11 conforme à l'invention.

La disposition longitudinale comprise entre moins dix à plus quarante degrés par rapport à l'horizontale, de préférence entre moins cinq à plus vingt-cinq degrés par rapport à l'horizontale, des cylindres 17 du moteur 18 et de ses accessoires mécaniques, électroniques ou de carburation (carburateur, injecteur, boîte à air) placés sous le niveau supérieur des carters moteur permet au réservoir 19 d'être placé sensiblement plus centré que dans les motos de l'art antérieur.

Le radiateur d'eau 20 et éventuellement les silencieux 21 ne sont généralement pas placés sous le niveau supérieur des carters moteur

Un véhicule selon l'invention, du fait de la disposition longitudinale de ses éléments mécaniques et du fait de son empattement long, subira une perte de transfert de charge par rapport à un véhicule à empattement plus court. En conséquence il faut compenser ladite perte de transfert de charge en augmentant la masse initiale sur la roue arrière, par exemple en reculant le conducteur.

On peut dans ce but reculer les poignées de commande ou le guidon 22 de la moto sur un axe rotatif 23 indépendant de l'axe directionnel 3. Les T de fourche 5 et 6 et la suspension avant 4 sont reliés au guidon 22 par l'intermédiaire d'au moins une biellette 24 pivotant par exemple sur au moins une paire de rotules 25 et 26.

La rotule 25 est solidaire de l'ensemble directionnel et la rotule 26 est solidaire du guidon 22, ce qui permet ainsi d'augmenter l'empattement 10-13 de la moto de la longueur efficace 25-26 de biellette 24, tout en gardant le poids du conducteur sur la roue arrière.

L'invention, dans son application à un véhicule à deux roues sportif, a pour but de permettre l'utilisation optimale de l'adhérence de pneumatiques performants à l'accélération et au freinage, utilisation optimale incompatible avec un empattement court. L'invention consiste à combiner une suspension capable de procurer maniabilité et motricité avec une structure à empattement long.

Grâce à l'invention, on obtient la conjonction d'une suspension avant à déport géométrique variable et l'utilisation d'un empattement long.

Le pignon de chaîne de la roue arrière est de diamètre sensiblement égal ou inférieur au pignon de chaîne avant, et le pignon de chaîne avant est avantageusement placé derrière l'axe géométrique du bras oscillant.

La position sensiblement horizontale du bras oscillant lors de la compression de la suspension maximum en virage ou à l'accélération est de plus en conjonction avec des pneumatiques d'adhérence supérieure à Mu = 1,2 et un empattement long. La présence en arrière de l'axe géométrique du bras oscillant d'un dispositif tournant autour d'un point se situant sur l'axe 12-16 permet au brin de chaîne supérieur d'être maintenu sensiblement parallèle audit axe géométrique, lors de la phase d'accélération en utilisant de préférence une chaîne unique.

La rotation directionnelle de la suspension avant 4 sur un axe 3 indépendant de la rotation du guidon 22 autour d'un axe 23 placé plus en arrière est obtenue par la présence d'au moins une biellette 24 et d'au moins d'une paire de rotules 25,26 assurant une transmission du mouvement directionnel. Cette disposition, ainsi que la position des accessoires tels que carburateur ou injection électronique, batterie, boîte à air et en dessous du plan supérieur des carters moteurs, permettent de combiner une suspension capable de procurer maniabilité et motricité avec une structure à empattement long.

L'invention permet ainsi d'obtenir des véhicules à deux roues, en particulier motocyclettes ou vélomoteurs, combinant une suspension capable de procurer maniabilité et motricité avec une structure à empattement long.

## Revendications

1. Dispositif, notamment pour véhicule à une roue avant directrice et à transmission par chaîne (15) entraînant une roue arrière motrice, comportant une suspension arrière à bras oscillant (11) et au moins deux pignons coopérant avec cette chaîne (11) d'entraînement, caractérisé par la présence d'un pignon, disque, glissière courbe ou poulie intermédiaire porté (16) par le cadre du véhicule de diamètre et de position déterminés pour qu'en phase d'accélération, la suspension soit comprimée de manière que le brin supérieur de la chaîne (15) soit sensiblement parallèle au bras oscillant (11), en réduisant ainsi les accélérations angulaires et parasites de la roue arrière ; et par une position de l'axe (12) de bras oscillant à une hauteur égale ou supérieure à l'axe (13) de roue arrière lors de l'enfoncement maximal de la roue arrière.

2. Dispositif selon la revendication 1, caractérisé en ce que ledit pignon, disque, ou poulie intermédiaire est monté (16) libre en rotation sur une partie du cadre du véhicule.

3. Dispositif selon 1 revendication 1, caractérisé en ce que ledit pignon, disque, ou poulie intermédiaire est entraîné en rotation par le moteur du véhicule et entraîne la chaîne (15) de transmission arrière.

4. Dispositif selon la revendication 1 ou la revendication 2, caractérisé en ce que le diamètre du pignon, disque, glissière courbe ou poulie intermédiaire (16) est égal ou supérieur au diamètre du pignon (13) de roue arrière.

5. Dispositif selon l'une quelconque des revendications précédentes, caractérisé en ce que le dispositif comporte un cadre (1) destiné à recevoir un bâti (4) de fourche télescopique de roue avant directrice, et comporte un ensemble de suspension-transmission arrière anti-squat et annulant les accélérations angulaires et parasites de roue arrière.

6. Dispositif selon la revendication 5, caractérisé en ce que l'ensemble de suspension-transmission arrière comporte un bras oscillant (11) pivotant (12) sur le cadre (1) et un organe d'amortissement (14) monté entre le cadre (1) et le bras oscillant (11).

7. Dispositif selon la revendication 5 ou la revendication 6, caractérisé en ce que le cadre (1) est agencé pour déterminer un empattement long de véhicule, après montage complet du véhicule.

8. Dispositif selon la revendication 5, caractérisé en ce que le cadre (1) est conformé pour recevoir un moteur (18) à cylindres (17) sensiblement horizontaux, d'inclinaison comprise dans une plage angulaire de moins dix à plus quarante degrés par rapport à l'horizontale.

9. Dispositif selon la revendication 5, caractérisé en ce que le cadre (1) porte un relais mécanique (24-26) permettant de commander la direction de la roue avant au moyen de poignées (22) de commande décalées (23) par rapport à l'axe (3) du tube (2) de direction de la roue avant directrice.

10. Véhicule à une roue avant directrice, notamment motocyclette, incorporant un dispositif selon l'une quelconque des revendications précédentes.
